Europäisches Patentamt

European Patent Office

Office européen des brevets

(11) EP 1 316 572 A1

(12) DEMANDE DE BREVET EUROPEEN

(43) Date de publication:
04.06.2003 Bulletin 2003/23

(51) Int Cl.$^7$: **C08G 18/42**, C08G 18/12,
C09J 175/04

(21) Numéro de dépôt: 02292915.2

(22) Date de dépôt: 25.11.2002

(84) Etats contractants désignés:
**AT BE BG CH CY CZ DE DK EE ES FI FR GB GR
IE IT LI LU MC NL PT SE SK TR**
Etats d'extension désignés:
**AL LT LV MK RO SI**

(30) Priorité: **30.11.2001 FR 0115502**

(71) Demandeur: **Bostik Findley S.A.
92800 Puteaux (FR)**

(72) Inventeurs:
• **Miskovic, Michel
60200 Compiegne (FR)**
• **Chartrel, Jean-Francois
60400 Cuts (FR)**

(74) Mandataire: **Ohresser, François
Atofina
D.C.R.D./D.P.I.
4, Cours Michelet
La Défense 10
92091 Paris La Défense Cedex (FR)**

(54) **Procédé de fabrication de bouchons par collage de rondelles en liège massif utilisant des adhésifs polyuréthannes**

(57) L'invention a pour objet un procédé de fabrication de bouchons constitués d'un corps cylindrique et de rondelles en liège massif.

Le procédé de l'invention met en oeuvre un adhésif thermofusible polyuréthanne réactif réticulable à l'humidité obtenu par réaction d'un mélange d'un polyester polyol cristallin et d'au moins un polyester polyol amorphe avec un isocyanate en quantité telle que la teneur de l'adhésif en NCO libres est comprise entre 1 et 10 %.

EP 1 316 572 A1

**Description**

La présente invention concerne un procédé de fabrication de bouchons constitués d'un corps cylindrique et de rondelles en liège massif assemblés par collage au moyen d'un adhésif polyuréthanne. Elle concerne également les adhésifs de type Polyuréthannes thermofusibles réactifs (HMPUR) réticulables par l'humidité particulièrement adaptés au procédé.

Les bouchons utilisés pour fermer les bouteilles de vins tranquilles ou effervescents sont en général en liège. Pour des raisons d'économie et de pénurie, de nombreux producteurs n'utilisent plus de bouchons en liège massif mais des bouchons agglomérés (ou composites ou hybrides) à base de granulats et/ou de poudre liège de moindre qualité. Cependant, pour les vins de qualité, en vue de limiter le contact entre le bouchon aggloméré et le vin, on a été amené à disposer une ou plusieurs rondelles en liège massif sur l'une au moins des extrémités du corps ou manche du bouchon.

L'utilisation de ces bouchons pose avec une grande acuité le problème généralement désigné par le « goût de bouchon ». En effet l'utilisation d'un liège de moindre qualité pour la confection du manche accroît les risques de dégradation de la qualité du vin et cela d'autant plus que le liège massif utilisé pour la confection des rondelles présentent des pores naturels (lenticelles) risquant d'entraîner le contact entre le vin et la partie en liège aggloméré du bouchon (Wood Science and Technology - 34 (2000), p.3-10).

Il est généralement admis par les spécialistes que le «goût de bouchon » est dû à la présence de certaines molécules tels que le trichloroanisole (TCA) ou le trichlorométhoxybenzène. Ces molécules proviennent de la transformation des polyphénols et/ou tannins présents dans le liège naturel. Ces transformations sont dues soit à des réactions chimiques lors des traitements du bouchon, soit à des réactions biochimiques liées à la présence de microorganismes au sein du liège.

Actuellement, le collage ou « affichage » des rondelles en liège massif aux extrémités du manche est réalisé au moyen de colles à base de caséine, pour l'assemblage de ces bouchons hybrides de type champenois.

Il a été envisagé de substituer la colle caséine par des polyuréthannes thermoplastiques en dispersion (PUD). Cette solution, n'offre pas de garantie suffisante au regard du cahier des charges organoleptique et/ou alimentaire demandé par les producteurs. On retiendra notamment la présence de tensioactifs, substances migrantes par excellence, dans ces polyuréthannes en dispersion.

De la même manière, il a été préconisé d'utiliser des latex naturels ou synthétiques, lesquels présentent les mêmes inconvénients que les Polyuréthannes thermoplastiques en dispersion (PUD) et les colles à base de caséine, à savoir :

- un temps de séchage important (2 à 3 semaines),
- des effluents aqueux,
- un maintien sous contrainte pendant la réticulation,
- des problèmes de stabilité au stockage des colles aqueuses (température, contamination bactériologique ou fongique),

De plus, les colles aqueuses en solution ou en dispersion étant un vecteur important de contamination bactériologique et/ou fongique, leur utilisation nécessite le plus souvent d'avoir recours à l'ajout de biocides en quantité plus ou moins importante pour le stockage et le transport de celle-ci.

A côté de ces colles aqueuses, on trouve quelques exemples de polymères en solution, lesquels sont à l'origine de problèmes organoleptiques. Sous l'angle procédé, on retrouve là encore les contraintes d'effluents, de point éclair et de temps de séchage.

L'utilisation de résines thermodures (PF et UF) pourrait être envisagée. Cependant, outre la présence déjà rédhibitoire de formol libre ces résines présentent des inconvénients supplémentaires :

- un manque de cohésion initiale,
- un manque de souplesse du joint de colle,
- une utilisation à pH acide.

En résumé, les adhésifs actuellement utilisés ou envisagés pour le collage des rondelles de liège ne donnent pas satisfaction sur le plan organoleptique (substances migrantes, stabilité bactériologique), sont également contraignants sur le plan procédé, avec des durées de maintien sous contrainte, des temps de séchage longs (2 à 4 semaines à température ambiante en silo ventilé) et des effluents à traiter.

Industriellement, le collage caséine est effectué à une cadence élevée, supérieure à 5000 bouchons par heure, voire 8000 à 12000. Les dispositifs de collage opèrent par enduction de la rondelle avec de l'adhésif au moyen d'une encolleuse à rouleau ou d'une buse. La rondelle est ensuite affichée sur le corps de base ou sur une autre rondelle déjà affichée, et l'assemblage ainsi formé est maintenu sous contrainte pendant 15 à 45 minutes à une température comprise entre 50°C et 90°C.

La quantité de colle déposée est dite au refus.

La présente invention a pour but d'éliminer les contraintes et inconvénients liés à l'utilisation des colles pour rondelles de l'art antérieur tout en permettant une fabrication simple et améliorée des bouchons « hybrides » sur base liège.

Le problème est donc de trouver pour la fabrication des bouchons une technique de collage des rondelles qui

- n'utilise pas de colles aqueuses, caséine par exemple, qui sont particulièrement favorable au développement des microorganismes,
- met en oeuvre des colles convenables sur le plan organoleptique,
- présente des performances en matière d'élasticité et de solidité, et
- répond aux impératifs industriels en matière de cadence de fabrication.

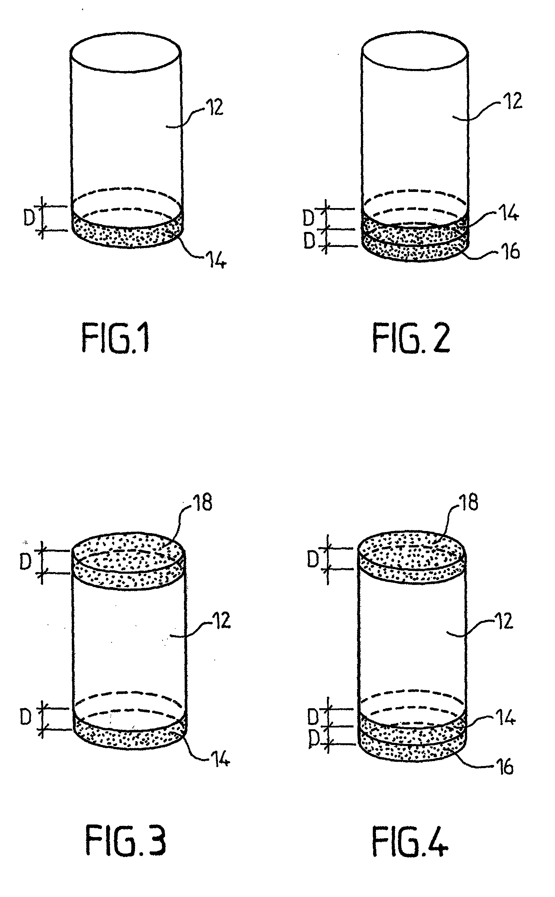

Ainsi, la présente invention a pour objet un procédé de fabrication de bouchons tels que ceux décrits aux figures 1,2,3 et 4, constitués d'un corps cylindrique (12) et d'au moins une rondelle en liège massif (14, 16 et/ou 18) assemblés par collage au moyen d'un adhésif thermofusible polyuréthanne réactif réticulable par l'humidité, constitué d'un prépolymère polyuréthanne obtenu par polyaddition d'au moins un polyol avec au moins un isocyanate choisi dans le groupe des diisocyanates et/ou triisocyanates et des produits de réaction des mêmes isocyanates avec l'eau, ledit prépolymère ayant une teneur en NCO libres comprise entre 1 et 10 % en poids, de préférence entre 1,5 et 5 % en poids.

De manière avantageuse, les adhésifs thermofusibles polyuréthane réactifs sont obtenus par polyaddition d'un mélange de polyols et d'un isocyanate aromatique, de préférence le diphénylméthane diisocyanate.

L'adhésif selon l'invention sera généralement obtenu à partir de polyols constitués de :

- 45 à 60 % en poids d'un polyester polyol aliphatique cristallin de fonctionnalité 2 et de masse moléculaire Mn comprise entre 3000 et 4000.
- 0 à 40 % en poids d'un polyester polyol aliphatique /aromatique amorphe de fonctionnalité 2 et de masse moléculaire comprise entre 3000 et 5000.
- 10 à 50 % en poids d'un polyester polyol aliphatique amorphe de fonctionnalité 2 et de masse moléculaire Mn comprise entre 5000 et 7000.
- 0 à 5 % en poids d'un polyester polyol aliphatique amorphe de fonctionnalité 3 et de masse moléculaire comprise entre 250 et 1000.

Le polyol ou mélange de polyols est préférentiellement choisi parmi les polyesters polyols, mais il peut contenir une fraction minoritaire de polyéthers polyols ou de polyols insaturés (exemple : $\alpha,\omega$-polybudatiène dihydroxylé ou Poly Bd® R 45 HT).

Les polyesters polyols sont généralement choisi parmi les polyesters polyols aliphatiques et aromatiques, et les mélanges de ces composés. Leur masse moléculaire est, de préférence, comprise entre 250 et 10000 et leur fonctionnalité est comprise entre 2 et 3.

A titre d'exemple, on peut citer les polyesters polyols résultant de la condensation de polyols aliphatiques, cycliques ou aromatiques tels que le 1,2-éthanediol, le 1,2-propanediol, le 1,3-propanediol, le glycérol, le triméthylolpropane, le 1,6-hexanediol, le 1,2,6-hexanetriol, le butènediol, le sucrose, le glucose, le sorbitol, le pentaérythritol, le mannitol, la triéthanolamine, la N-méthyl diéthanolamine et les mélanges de ces composés avec un diacide carboxylique tel que l'acide 1,6-hexanedioïque, l'acide dodécanedioïque, l'acide azélaïque, l'acide sébacique, l'acide adipique, l'acide 1,18-octadécanedioïque, l'acide phtalique, l'acide succinique et les mélanges de ces diacides, un anhydride insaturé tel que l'anhydride maléique ou phtalique, ou un homopolymère de lactone telle que la $\varepsilon$-caprolactone.

On utilise, de préférence, les polyesters polyols résultant de la condensation du 1,2-éthanediol, du 1,3-propanediol et/ou du 1,6-hexanediol avec l'acide adipique et/ou l'acide phtalique.

Les polyéthers polyols pouvant constituer la fraction minoritaire sont généralement choisi parmi les polyéthers polyols aliphatiques et aromatiques, et les mélanges de ces composés. Leur masse moléculaire est, de préférence, comprise entre 200 et 9000 et leur fonctionnalité hydroxyle est comprise entre 2,0 et 4,6.

A titre d'exemples de polyéthers polyols aliphatiques ou aromatiques, on peut citer de manière non limitative les dérivés oxyalkylés de diols tels que les polypropylènes glycols, ou de triols tels que le glycérol, le triméthylolpropane et l'hexane-1,2,6-triol, les polymères d'oxyde d'éthylène, de propylène ou de butylène, les copolymères d'oxyde d'éthylène et d'oxyde de propylène, ainsi que les dérivés oxyalkylés de diphényles tels que les dérivés oxyéthylés et oxypropylés en position 4,4' du diphénylméthane.

De préférence, on utilise les dérivés oxypropylés de glycol et ou glycérol, les polymères d'oxyde de propylène ou de butylène et les copolymères d'oxyde d'éthylène et d'oxyde de propylène.

Les polyols précités sont des mélanges de polyols de structure cristalline et/ou amorphe.

Les polyols de structure cristalline conféreront d'une manière générale une montée en cohésion de l'adhésif alors que les polyols de structure amorphe lui apporteront plutôt des propriétés de viscosité et de tack.

Les polyols précités peuvent également être utilisés en mélange avec d'autres composés hydroxylés. On peut ainsi utiliser les copolymères de l'éthylène, de l'acétate de vinyle et de l'acrylate de 2-hydroxyéthyle tel que l'OREVAC® 9402 commercialisé par ATO FINA, l'$\alpha,\omega$-polybutadiène dihydroxylé tel que le Poly Bd® R 45 HT commercialisé par ATO FINA, les résines indène/coumarone modifiées par du phénol, par exemple la NOVARES® CA120 commercialisée par VFT, et les résines tackifiantes hydroxylées, par exemple REAGEM commercialisées par DRT.

L'isocyanate appartient au groupe constitué par les polysocyanates aromatiques, aliphatiques, cycloaliphatiques bien connus de l'homme du métier, ainsi que les mélanges de ces composés.

- A titre d'exemples de polyisocyanates aromatiques, on peut citer le diphénylméthane diisocyanate (MDI), notamment le diphénylméthane-4,4'-diisocyanate, le diphénylméthane-2,4'-diisocyanate, le toluène diisocyanate (TDI), notamment le toluène-2,4-diisocyanate et le toluène-2,6-diisocyanate.
- A titre d'exemples de polyisocyanates aliphatiques, on peut citer l'hexaméthylène diisocyanate (HMDI).
- A titre d'exemples de polyisocyanates cycloaliphatiques, on peut citer l'isophorone diisocyanate (IPDI).
- les diisocyanates trimérisés en isocyanurates qui dérivent de diisocyanates choisis dans le groupe constitué du diphénylméthane-4,4'-diisocyanate, du diphénylméthane-2,4'-diisocyanate, des dérivés d'hydrogénés des diisocyanates précités, du toluène-2,4-diisocyanate, du toluène-2,6-diisocyanate, de l'hexaméthylène diisocyanate, de l'isophoronediisocyanate et de leurs mélanges,
- les produits de réaction des diisocyanates avec l'eau tels que par exemple les produits de réaction du toluène diisocyanate ou de l'hexaméthylène diisocyanate avec l'eau (ce dernier étant vendu sous la dénomination DESMODUR® N de BAYER), et leur mélanges.

On préfère un isocyanate trimérisé, lesquel renferme en général moins de 0,2 % en poids de monomères isocyanate libres.

On peut préparer les adhésifs polyuréthannes réticulables par l'humidité selon l'invention en faisant réagir les polyols et le cas échéant les autres composés hydroxylés, éventuellement deshydratés à haute température sous vide, avec les isocyanates et/ou isocyanurates à l'abri de l'humidité et le cas échéant sous gaz inerte, à une température pouvant varier de 90 à 120°C jusqu'à ce que l'on obtienne la teneur souhaitée en groupes isocyanates. A l'adhésif ainsi obtenu, on ajoute par mélange les éventuels additifs.

Les adhésifs réticulables par l'humidité selon l'invention peuvent aussi contenir une fraction minoritaire d'additifs, tels que des charges, des agents tackifiants, des plastifiants, des promoteurs d'adhérence tels que des composés comportant des groupes silanyles et des catalyseurs qui accélèrent la réticulation par l'humidité, par exemple des catalyseurs métalliques tels que le dibutyl dilaurate d'étain.

Les adhésifs thermofusibles Polyuréthanes réactifs (HMPUR) selon l'invention peuvent aisément être identifiés à l'aide des techniques analytiques classiques de déformulation telles que :

- Microscopie Infra-Rouge, Résonance Magnétique Nucléaire (RMN) en phase Solide ou Imagerie par Résonance Magnétique Nucléaire (IRM) directement sur les bouchons.
- Hydrolyse alcaline, séparation des constituants et analyse des fractions par Résonance Magnétique Nucléaire en phase liquide (RMN 1H/13C), Chromatographie Phase Vapeur (CPV) et Chromatographie par Perméation de gel (GPC).

Les diverses formes de réalisation des bouchons selon l'invention sont décrites et expliquées de manière plus détaillée en référence aux figures 1, 2, 3 et 4 en annexe. Les dessins montrent :

- sur la figure 1 : l'illustration schématique d'un bouchon pour bouteilles vu en perspective, ce bouchon comprenant une rondelle (14) en liège de section sensiblement égale à celle du corps et disposée sur une face du corps (12) oblong et cylindrique du bouchon. Lors du bouchage, le bouchon dit de type 1, est introduit dans le goulot de la bouteille dans la position illustrée sur le dessin, de sorte que la rondelle (14) se trouve orientée vers le vin contenu dans la bouteille.
- sur la figure 2 : l'illustration schématique d'un bouchon pour bouteilles vu en perspective, ce bouchon comprenant deux rondelles en liège (14) et (16) solidaires entre elles et disposées sur l'une des deux faces du corps (12) du bouchon. Cette rondelle (16) à la même épaisseur D que la rondelle (14). Par ailleurs, on peut ajouter d'autres rondelles de ce type non représentées figure 2. Ces bouchons dits de type 2 + sont utilisés, de préférence, pour les bouteilles de vins effervescents tel que le champagne.

- sur la figure 3 : l'illustration schématique d'un bouchon pour bouteilles vu en perspective, ce bouchon comprenant deux rondelles en liège(14) et (18) disposées chacune sur une des deux faces du corps (12) du bouchon, ces bouchons pour bouteilles dits de type 1 + 1 sont utilisés, de préférence, pour les bouteilles de vins tranquilles.
- sur la figure 4 : l'illustration schématique d'un bouchon pour bouteilles vu en perspective comprenant deux rondelles en liège (14) et (16) disposées sur une face, et une rondelle supplémentaire en liège (18) disposée sur la face opposée du corps (12) du bouchon. Ces bouchons sont dits de type 2 + 1

Sur les schémas les épaisseurs (D) sont identiques, mais naturellement on pourra utiliser des rondelles d'épaisseurs différentes.

On retiendra pour la confection des bouchons décrits ci-dessus, toutes les combinaisons possibles entre les différents types de liège listés ci-après :

- le liège brut traité (lavage, étuvage, stérilisation au peroxyde d'hydrogène, etc ...) ou non traité souvent utilisé dans la confection de bouchons tubés.
- le liège usiné traité ou non traité plutôt utilisé pour la fabrication du corps de bouchons et des rondelles.
- les lièges agglomérés et composites.

Il s'agit également d'appliquer un adhésif Polyuréthanne thermofusible réactif (HMPUR) à l'aide d'un procédé qui soit en accord avec les impératifs économiques et industriels. L'application de l'adhésif selon l'invention par fibérisation, pulvérisation, buse circulaire, buse à lèvres, encolleuse à rouleaux, etc ... permet de répondre avantageusement à ces impératifs. Un procédé particulièrement adapté et préféré selon l'invention est un dépôt par buse à lèvres car elle permet une dépose uniforme de la colle à la surface du corps du bouchon en rotation ou non, et de rattraper les irrégularités de la surface du liège.

Lors de l'assemblage du bouchon, contrairement aux colles caséine, l'adhésif thermofusible Polyuréthanne réactif est nécessairement appliqué à l'état fondu entre 90°C et 140°C sur le corps du bouchon, lequel est à température ambiante et se déplace à la vitesse V, manche sur lequel est immédiatement affiché en un temps très court une rondelle également à température ambiante. La force d'inertie subie par la rondelle étant donnée par la relation $F = m.A$ (m étant la masse de la rondelle et A l'accélération). On comprend dans ces conditions que l'adhésif est soumis à un fort cisaillement sous contrainte imposée avec un risque important de fluage et de glissement de la rondelle aux cadences envisagées.

La demanderesse a maintenant trouvé de manière inattendue que les compositions Polyuréthannes thermofusibles réactives (HMPUR) selon l'invention permettaient de répondre à ce cahier des charges.

Ainsi, la présente invention a également pour objet des adhésifs thermofusibles Polyuréthanes réactifs (HMPUR) présentant, dans la plage de température du procédé comprise entre 15°C et 140°C, un profil de viscosité $\eta$ en fonction de la température à 1 Hz sous une contrainte de 1000 Pa (mesurée selon la Norme ISO 11443 pour une vitesse de refroidissement de 20°C / min entre 110°C et 30°C) compris dans le domaine défini par les courbes n1 et n2 :

## Critère de Viscosité en fonction de la Température

Définie par les quatre équations de régression :

$$n1 = 1890 + \frac{1041122.x^{-50}}{32,5^{-50} + x^{-50}} \text{ de 30 à 38}°C$$

$$n1 = 43453321.x^{-3,0436} \text{ de 40 à 110}°C$$

et

$$n2 = 8432 + \frac{1106508.x^{-44}}{36^{-44} + x^{-44}} \text{ de 30 à 40}°C$$

$$n2 = 1582998929.x^{-3,7318} \text{ de 42 à 110}°C$$

Ainsi qu'un profil de viscosité η en fonction du temps à 1 Hz sous une contrainte de 1000 Pa (mesurée selon la Norme ISO 11443 pour un refroidissement de 110°C à 45°C en 80 secondes puis stabilisation 20 secondes avant mesure) compris dans le domaine défini par les courbes t1 et t2 :

**Evolution de la Viscosité à 45°C en fonction du temps**

Telles que définies par les quatre équations de régression :

$$t1 = 646 + 1,4.x + 41,5.e^{0,055.x} \text{ de 0 à 74 secondes}$$

$$t1 = -238848 + \frac{-163.x + 1649982}{1 + e^{\frac{-x+182}{65}}} \text{ de 79 à 400 secondes}$$

et

$$t2 = 425 + 1,1.x + 0,7.e^{0,056.x} \text{ de 0 à 135 secondes}$$

$$t2 = -23783 + \frac{262.x + 846117}{1 + e^{\frac{-x+281}{54}}} \text{ de 140 à 400 secondes}$$

L'examen de ces deux domaines de validité permettent de conclure que les adhésifs selon l'invention présentent une cinétique de remontée en viscosité élevée entre 40°C et 50°C les rendant peu sensibles au phénomène de fluage.

Les adhésifs thermofusibles réticulables par l'humidité selon l'invention sont donc particulièrement adaptés au collage de rondelles de liège dans la confection industrielle de bouchons de champagne ou de bouchons ayant une rondelle collée à chaque extrémité du corps, et permettent de fonctionner à des cadences élevées, c'est à dire entre 10 000 à 12 000 bouchons à l'heure, voire davantage.

**EXEMPLES**

Les exemples qui suivent illustrent l'invention. On y a comparé l'efficacité de différentes compositions HMPU. Les compositions 1 et 2 définissent les bornes du domaine de validité de l'invention.

Dans les exemples 1 et 2, les HMPUR sont caractérisés par :

- Une résistance à la rupture et un allongement à la rupture : On coule l'adhésif fondu à 100°C sur du papier siliconé à l'aide d'un filmographe préchauffé à 100°C pour former un film de 25 cm de longueur, 9 cm de largeur et 300 µm d'épaisseur. Le film est soumis à une température de 23°C et une humidité relative de 50 % jusqu'à polymérisation complète (de l'ordre de 4 semaines). Après avoir retiré le papier siliconé, on découpe le film avec un emporte-pièce pour former des éprouvettes (type H2 - Norme AFNOR T 46002) que l'on tire par traction avec une machine d'essai (Type DY 30 - ADAMEL-LHOMARGY) à la vitesse constante de 100 mm/min. Les mesures sont effectuées sur 5 éprouvettes, la résistance à la rupture est exprimée en MPa et l'allongement à la rupture en % de la longueur initiale de l'éprouvette.
- un profil de viscosité tel que défini dans les deux diagrammes précédents
- un temps ouvert : la mesure se fait en déposant sur un éprouvette de carton, un trait d'adhésif à environ 130°C, d'environ 1.5 mm de largeur. On laisse refroidir à la température ambiante jusqu'à ce que l'on n'observe plus un bon collage (arrachement avec défibrage du carton) avec une seconde éprouvette de carton contrecollé. Le temps d'attente maximum permettant de conserver un bon collage est le temps ouvert.

Un bouchon pour bouteilles de champagne comportant deux rondelles collées à l'extrémité libre du manche est préparé. Le collage des rondelles est réalisé par enduction de la section du manche et des rondelles à l'aide d'une buse à lèvre sur une machine automatique de la Société TECHNOCABLE. Chaque plan de collage nécessite de 0,07 à 0,15 g d'adhésif suivant le modèle de bouchon et la surface à encoller.

L'adhésif est mis en oeuvre au moyen d'un fondoir, chaque buse est alimentée par une pompe doseuse indépendante assurant ainsi la régularité de chaque débit. L'ensemble des équipements est thermostaté. Le fondoir est maintenu sous azote ou air anhydre.

L'encollage s'effectue sur machine automatique avec rotation complète du support à encoller (ex. le manche) de manière à enduire toute la surface, laquelle opération est immédiatement suivie de l'affichage du second support (ex. la rondelle) est réalisé immédiatement après celui-ci et d'un maintien de l'ensemble sous presse (d'abord par presse transfert, puis par presse en ligne).

Les machines industrielles utilisées sont conçues pour assembler selon le modèle de 6000 à 12000 bouchons à l'heure.

Exemple 1 selon l'invention (borne maxi à 12000 bouchons heures)

Dans un réacteur à 95-100°C maintenu sous atmosphère d'azote, on introduit 514 parties en poids de polyester polyol A de structure aliphatique cristallin, acide sébacique/hexanediol (masse moléculaire = 3500 ; fonctionnalité = 2), 342 parties en poids de polyester polyol B de structure aliphatique / aromatique amorphe, mélanges acides adipiques, acide isophtalique /éthylèneglycol, neopenthyl glycol (masse moléculaire = 3500 ; fonctionnalité = 2) 151 parties en poids de polyester polyol C de structure aliphatique amorphe, acide adipique / neopenthyl glycol, éthylèneglycol, hexanediol (masse moléculaire = 5500 ; fonctionnalité = 2).

Le mélange est mis sous vide pendant 1H30, puis on introduit 146 parties en poids de MDI.

Au terme de la réaction, la teneur en isocyanate libre du prépolymère est égale à 2,2 %. poids

Le prépolymère obtenu est solide à température ambiante et présente une coloration jaune / blanc.

Le prépolymère obtenu, solide de couleur jaune /blanc à température ambiante, présente un temps ouvert de 90 - 100 secondes.

Les propriétés mécaniques de l'adhésif ainsi obtenu sont définies par la résistance à la rupture et l'allongement à la ruptures mesurées dans les conditions précédemment décrites :

- Résistance à la rupture : 23 MPa
- Allongement à la rupture : 1076 %

Cette composition présente un profil de viscosité entre 30 et 120°C au borne maxi du domaine de revendication, tel que défini par les 2 courbes :

$$n1 = 1890 + \frac{1041122.x^{-50}}{32,5^{-50} + x^{-50}} \text{ de 30 à 38°C}$$

$$n1 = 43453321.x^{-3,0436} \text{ de 40 à 110°C}$$

Cette composition présente un profil cinétique d'évolution de viscosité à 45°C de 0 à 400 secondes au borne maxi du domaine de revendication, tel que défini par les 2 courbes :

$$t1 = 646 + 1,4.x + 41,5.e^{0,055.x} \text{ de 0 à 74 secondes}$$

$$t1 = -238848 + \frac{-163.x + 1649982}{1 + e^{\frac{-x+182}{65}}} \text{ de 79 à 400 secondes}$$

Exemple 2 selon l'invention (borne mini à 6000 bouchons /heure)

Dans un réacteur sous atmosphère d'azote, on introduit 225 parties en poids de MDI, puis à 80°C, 478 parties en poids du polyester polyol B de l'exemple 1, 708 parties en poids du polyester polyol A de l'exemple 1 et 47 parties en poids de polyester polyol de structure aliphatique amorphe, caprolactame polyol(masse moléculaire = 540 ; fonctionnalité = 3).

- Le mélange est porté à une température comprise entre 90°C et 95°C.
- Au terme de la réaction lorsque la teneur en isocyanate libre du prépolymère est égale à 2,7 % poids.

Le prépolymère obtenu, solide de couleur jaune /blanc à température ambiante, présente un temps ouvert de 65 - 75 secondes.

Les propriétés mécaniques de l'adhésif ainsi obtenu sont définies par la résistance à la rupture et l'allongement à la ruptures mesurées dans les conditions précédemment décrites :

- Résistance à la rupture : 21 MPa
- Allongement à la rupture : 935 %

Cette composition présente un profil de viscosité entre 30 et 120°C au borne mini du domaine de revendication, tel que défini par les 2 courbe :

$$n2 = 8432 + \frac{1106508.x^{-44}}{36^{-44} + x^{-44}} \text{ de 30 à 40°C}$$

$$n2 = 1582998929.x^{-3,7318} \text{ de 42 à 110°C}$$

Cette composition présente un profil cinétique d'évolution de viscosité à 45°C de 0 à 400 secondes au borne mini du domaine de revendication, tel que défini par les 2 courbes :

$$t2 = 425 + 1,1.x + 0,7.e^{0,056.x} \text{ de 0 à 135 secondes}$$

$$t2 = -23783 + \frac{262.x + 846117}{1 + e^{\frac{-x+281}{54}}} \text{ de 140 à 400 secondes}$$

**Revendications**

**1.** Procédé de fabrication de bouchons constitués d'un corps cylindrique et d'au moins une rondelle en liège massif assemblés par collage au moyen d'un adhésif thermofusible polyuréthanne réactif réticulable par l'humidité, appliqué à l'état fondu et constitué d'un prépolymère polyuréthanne obtenu par polyaddition d'au moins un polyol avec au moins un isocyanate choisi dans le groupe des diisocyanates et/ou triisocyanates et des produits de réaction des mêmes isocyanates avec l'eau, ledit prépolymère ayant une teneur en NCO libres comprise entre 1 et 10 % en poids, de préférence entre 1,5 et 5 % en poids.

2. Procédé selon la revendication 1 dans lequel le polyol est constitué de :

- 45 à 60 % en poids d'un polyester polyol aliphatique cristallin de fonctionnalité 2 et de masse moléculaire Mn comprise entre 3000 et 4000.
- 0 à 40 % en poids d'un polyester polyol aliphatique /aromatique amorphe de fonctionnalité 2 et de masse moléculaire comprise entre 3000 et 5000.
- 10 à 50 % en poids d'un polyester polyol aliphatique amorphe de fonctionnalité 2 et de masse moléculaire Mn comprise entre 5000 et 7000.
- 0 à 5 % en poids d'un polyester polyol aliphatique amorphe de fonctionnalité 3 et de masse moléculaire comprise entre 250 et 1000.

3. Procédé selon l'une des revendications 1 et 2 l'isocyanate est choisi parmi le MDI, le TDI, le HMDI et/ou l'IPDI ou un diisocyanate trimérisé en isocyanurate tel que l'hexaméthylènediisocyanate trimérisé.

4. Procédé selon la revendication 2 dans lequel les polyols et leurs mélanges sont choisis parmi les polyesters polyols aliphatiques et aromatiques résultant de la condensation de polyols aliphatiques, cycliques ou aromatiques tels que le 1,2-éthanediol, le 1,2-propanediol, le 1,3-propanediol, le glycérol, le triméthylolpropane, le 1,6-hexanediol, le 1,2,6-hexanetriol, le butènediol, le sucrose, le glucose, le sorbitol, le pentaérythritol, le mannitol, la triéthanolamine, la N-méthyl diéthanolamine et les mélanges de ces composés avec un diacide carboxylique tel que l'acide 1,6-hexanedioïque, l'acide dodécanedioïque, l'acide azélaïque, l'acide sébacique, l'acide adipique, l'acide 1,18-octadécanedioïque, l'acide phtalique, l'acide succinique et les mélanges de ces diacides, un anhydride insaturé tel que l'anhydride maléique ou phtalique ou des homopolymères de ε-caprolactone.

5. Procédé selon l'une des revendications 1 à 4 dans lequel l'adhésif thermofusible polyuréthanne réactif (HMPUR) est appliqué à chaud entre 90°C et 140°C et a une teneur en isocyanate telle qu'il présente :

- un profil de viscosité entre 30 et 110°C (exprimé en Pa.s) compris dans un domaine situé entre les courbes mini et maxi :

$$n1 = 1890 + \frac{1041122.x^{-50}}{32,5^{-50} + x^{-50}} \text{ de 30 à 38°C}$$

$$n1 = 43453321.x^{-3,0436} \text{ de 40 à 110°C}$$

et

$$n2 = 8432 + \frac{1106508.x^{-44}}{36^{-44} + x^{-44}} \text{ de 30 à 40°C}$$

$$n2 = 1582998929.x^{-3,7318} \text{ de 42 à 110°C}$$

- un profil d'évolution de viscosité à 45 °C (exprimé en Pa.s) entre 0 et 400 secondes :

$$t1 = 646 + 1,4.x + 41,5.e^{0,055.x} \text{ de 0 à 74 secondes}$$

$$t1 = -238848 + \frac{-163.x + 1649982}{1 + e^{\frac{-x+182}{65}}} \text{ de 79 à 400 secondes}$$

et

$$t2 = 425 + 1{,}1.x + 0{,}7.e^{0{,}056.x} \text{ de 0 à 135 secondes}$$

$$t2 = -23783 + \frac{262.x + 846117}{1 + e^{\frac{-x+281}{54}}} \text{ de 140 à 400 secondes}$$

- un temps ouvert compris entre 50 et 120 s,
- une résistance à la rupture comprise entre 20 et 25 Mpa.
- un allongement à la rupture compris entre 800 et 1100 %.

6. Procédé selon l'une des revendications 1 à 5 dans lequel l'adhésif est déposé par fibérisation, pulvérisation, buse circulaire, buse à lèvres ou rouleau encolleur.

7. Adhésif thermofusible polyuréthanne réactif (HMPUR) applicable à chaud entre 90°C et 140°C constitué d'un prépolymère polyuréthanne obtenu par polyaddition d'au moins un polyol avec au moins un isocyanate choisi dans le groupe des diisocyanates et/ou triisocyanates et des produits de réaction des mêmes isocyanates avec l'eau, ledit prépolymère ayant une teneur en NCO libres comprise entre 1 et 10 % en poids, et présentant :

- un profil de viscosité entre 30 et 110°C (exprimé en Pa.s) compris dans un domaine situé entre les courbes mini et maxi :

$$n1 = 1890 + \frac{1041122.x^{-50}}{32{,}5^{-50} + x^{-50}} \text{ de 30 à 38°C}$$

$$n1 = 43453321.x^{-3{,}0436} \text{ de 40 à 110°C}$$

et

$$n2 = 8432 + \frac{1106508.x^{-44}}{36^{-44} + x^{-44}} \text{ de 30 à 40°C}$$

$$n2 = 1582998929.x^{-3{,}7318} \text{ de 42 à 110°C}$$

- un profil d'évolution de viscosité à 45 °C (exprimé en Pa.s) entre 0 et 400 secondes :

$$t1 = 646 + 1{,}4.x + 41{,}5.e^{0{,}055.x} \text{ de 0 à 74 secondes}$$

$$t1 = -238848 + \frac{-163.x + 1649982}{1 + e^{\frac{-x+182}{65}}} \text{ de 79 à 400 secondes}$$

et

$$t2 = 425 + 1{,}1.x + 0{,}7.e^{0{,}056.x} \text{ de 0 à 135 secondes}$$

$$t2 = -23783 + \frac{262.x + 846117}{1 + e^{\frac{-x+281}{54}}} \text{ de 140 à 400 secondes}$$

- un temps ouvert compris entre 50 et 120 s,
- une résistance à la rupture comprise entre 20 et 25 Mpa. un allongement à la rupture compris entre 800 et 1100 %.

8. Adhésif selon la revendication 7 **caractérisé en ce que** la teneur en groupes NCO libres est de 1,5 et 5,0 % en poids de l'adhésif.

9. Adhésif selon l'une des revendications 7 et 8 **caractérisé en ce que** le HMPU selon l'invention est obtenu par réaction d'un mélange de polyols constitué de :

- 45 à 60 % en poids d'un polyester polyol aliphatique cristallin de fonctionnalité 2 et de masse moléculaire Mn comprise entre 3000 et 4000.
- 0 à 40 % en poids d'un polyester polyol aliphatique /aromatique amorphe de fonctionnalité 2 et de masse moléculaire comprise entre 3000 et 5000,
- 10 à 50 % en poids d'un polyester polyol aliphatique amorphe de fonctionnalité 2 et de masse moléculaire Mn comprise entre 5000 et 7000,
- 0 à 5 % en poids d'un polyester polyol aliphatique amorphe de fonctionnalité 3 et de masse moléculaire comprise entre 250 et 1000,

avec un isocyanate, un polyisocyanate ou un mélange d'isocyanates ou de polyisocyanates.

10. Adhésif selon l'une des revendications 7 à 9 **caractérisé en ce que** l'isocyanate est le MDI, le TDI, le HMDI et/ ou l'IPDI ou un diisocyanate trimérisé en isocyanurate tel que l'hexaméthylènediisocyanate trimérisé.

11. Adhésif selon les revendications 7 à 10 **caractérisé en ce que** les polyols et leurs mélanges sont choisis parmi les polyesters polyols aliphatiques et aromatiques résultant de la condensation de polyols aliphatiques, cycliques ou aromatiques tels que le 1,2-éthanediol, le 1,2-propanediol, le 1,3-propanediol, le glycérol, le triméthylolpropane, le 1,6-hexanediol, le 1,2,6-hexanetriol, le butènediol, le sucrose, le glucose, le sorbitol, le pentaérythritol, le mannitol, la triéthanolamine, la N-méthyl diéthanolamine et les mélanges de ces composés avec un diacide carboxylique tel que l'acide 1,6-hexanedioïque, l'acide dodécanedioïque, l'acide azélaïque, l'acide sébacique, l'acide adipique, l'acide 1,18-octadécanedioïque, l'acide phtalique, l'acide succinique et les mélanges de ces diacides, un anhydride insaturé tel que l'anhydride maléique ou phtalique ou des homopolymères de $\varepsilon$-caprolactone.

12. Adhésif selon la revendication 11 **caractérisé en ce que** les polyols ou leurs mélanges sont choisis préférentiellement parmi les polyols polyesters résultant de la condensation de polyols choisis parmi l'éthanediol, 1,3-propanediol et / ou du 1.6 hexanediol avec de l'acide adipique et / ou acide isophtalique, ou les des homopolymères de $\varepsilon$-caprolactone.

13. Adhésif selon l'une des revendications 7 à 12 **caractérisé en ce qu'**il contient une fraction minoritaire d'un ou plusieurs polyéthers polyols de fonctionnalité 2 ou de polyols variés de fonctionnalités 2 à 3.

14. Bouchons pour bouteilles de vin tranquille ou effervescent, de champagne et/ou de spiritueux, comprenant un corps de base cylindrique (12) en liège naturel ou en liège aggloméré, et au moins une rondelle (14) circulaire en liège massif fixée sur au moins une face du corps de base au moyen des adhésifs des revendications 7 à 13.

FIG.1

FIG. 2

FIG.3

FIG.4

Office européen
des brevets

**RAPPORT DE RECHERCHE EUROPEENNE**

Numéro de la demande

EP 02 29 2915

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int.Cl.7) |
|---|---|---|---|
| A | US 6 191 212 B1 (KUBE) 20 février 2001 (2001-02-20) * colonne 1, ligne 11 - colonne 4, ligne 13; revendications 1-3; exemple 1 * --- | 1-4 | C08G18/42 C08G18/12 C09J175/04 |
| A | DE 199 27 077 A (HENKEL) 23 décembre 1999 (1999-12-23) * page 2, ligne 19 - ligne 48 * * page 3, ligne 15 - page 4, ligne 12; revendications 1,2,5,6,12 * --- | 1 | |
| A | EP 0 481 155 A (COLOMBIN GM & FIGLIO) 22 avril 1992 (1992-04-22) * colonne 1, ligne 10 - ligne 51 * --- | 1 | |
| A | US 5 317 047 A (SABATE ET AL) 31 mai 1994 (1994-05-31) * colonne 2, ligne 12 - colonne 3, ligne 24 * * colonne 5, ligne 67 - colonne 6, ligne 13; revendications 1,2,8,9 * ----- | 1 | |

DOMAINES TECHNIQUES RECHERCHES (Int.Cl.7)

C08G
C09J

Le présent rapport a été établi pour toutes les revendications

| Lieu de la recherche | Date d'achèvement de la recherche | Examinateur |
|---|---|---|
| LA HAYE | 25 février 2003 | Bourgonje, A |

CATEGORIE DES DOCUMENTS CITES

X : particulièrement pertinent à lui seul
Y : particulièrement pertinent en combinaison avec un autre document de la même catégorie
A : arrière–plan technologique
O : divulgation non–écrite
P : document intercalaire

T : théorie ou principe à la base de l'invention
E : document de brevet antérieur, mais publié à la date de dépôt ou après cette date
D : cité dans la demande
L : cité pour d'autres raisons

............................................................................
& : membre de la même famille, document correspondant

EPO FORM 1503 03.82 (P04C02)

**ANNEXE AU RAPPORT DE RECHERCHE EUROPEENNE
RELATIF A LA DEMANDE DE BREVET EUROPEEN NO.**
EP 02 29 2915

La présente annexe indique les membres de la famille de brevets relatifs aux documents brevets cités dans le rapport de recherche européenne visé ci-dessus.
Lesdits members sont contenus au fichier informatique de l'Office européen des brevets à la date du
Les renseignements fournis sont donnés à titre indicatif et n'engagent pas la responsabilité de l'Office européen des brevets.

25-02-2003

| Document brevet cité au rapport de recherche | | Date de publication | Membre(s) de la famille de brevet(s) | | Date de publication |
|---|---|---|---|---|---|
| US 6191212 | B1 | 20-02-2001 | DE | 4032308 A1 | 16-04-1992 |
| | | | AT | 143027 T | 15-10-1996 |
| | | | DE | 59108213 D1 | 24-10-1996 |
| | | | DK | 552209 T3 | 24-02-1997 |
| | | | WO | 9207015 A1 | 30-04-1992 |
| | | | EP | 0552209 A1 | 28-07-1993 |
| | | | ES | 2091334 T3 | 01-11-1996 |
| DE 19927077 | A | 23-12-1999 | DE | 19927077 A1 | 23-12-1999 |
| | | | AU | 4609499 A | 10-01-2000 |
| | | | BR | 9912172 A | 05-11-2002 |
| | | | CA | 2335567 A1 | 29-12-1999 |
| | | | CN | 1310750 T | 29-08-2001 |
| | | | WO | 9967340 A1 | 29-12-1999 |
| | | | EP | 1088042 A1 | 04-04-2001 |
| | | | HU | 0104290 A2 | 28-03-2002 |
| | | | JP | 2002518576 T | 25-06-2002 |
| | | | NO | 20006480 A | 09-02-2001 |
| | | | PL | 345120 A1 | 03-12-2001 |
| | | | TR | 200003775 T2 | 21-06-2001 |
| EP 481155 | A | 22-04-1992 | EP | 0481155 A1 | 22-04-1992 |
| | | | ES | 2085344 T3 | 01-06-1996 |
| | | | HU | 60202 A2 | 28-08-1992 |
| | | | PT | 97489 A ,B | 30-04-1992 |
| US 5317047 | A | 31-05-1994 | FR | 2672002 A1 | 31-07-1992 |
| | | | AT | 123254 T | 15-06-1995 |
| | | | AU | 659437 B2 | 18-05-1995 |
| | | | AU | 1236892 A | 27-08-1992 |
| | | | DE | 69202708 D1 | 06-07-1995 |
| | | | DE | 69202708 T2 | 04-01-1996 |
| | | | EP | 0496687 A1 | 29-07-1992 |
| | | | ES | 2074856 T3 | 16-09-1995 |
| | | | WO | 9212848 A1 | 06-08-1992 |
| | | | GR | 3017192 T3 | 30-11-1995 |
| | | | HU | 64718 A2 | 28-02-1994 |
| | | | JP | 2726334 B2 | 11-03-1998 |
| | | | JP | 6505760 T | 30-06-1994 |
| | | | MX | 9200311 A1 | 01-09-1992 |
| | | | NZ | 241184 A | 28-10-1992 |
| | | | RO | 110216 B1 | 30-11-1995 |
| | | | RU | 2109779 C1 | 27-04-1998 |
| | | | ZA | 9200259 A | 28-10-1992 |

EPO FORM P0460

Pour tout renseignement concernant cette annexe : voir Journal Officiel de l'Office européen des brevets, No. 12/82